Europäisches Patentamt

(19) European Patent Office

Office européen des brevets

(11) Veröffentlichungsnummer: **0 117 263 B1**

(12) **EUROPÄISCHE PATENTSCHRIFT**

(51) Int. Cl.⁴: **A 47 J 31/057**, A 47 J 31/50, H 05 B 3/68

(45) Veröffentlichungstag der Patentschrift:
05.08.87

(21) Anmeldenummer: 83101865.0

(22) Anmeldetag: 25.02.83

(54) Elektrische Heizeinrichtung für Kaffeemaschinen.

(43) Veröffentlichungstag der Anmeldung:
05.09.84 Patentblatt 84/36

(45) Bekanntmachung des Hinweises auf die Patenterteilung:
05.08.87 Patentblatt 87/32

(84) Benannte Vertragsstaaten:
DE GB

(56) Entgegenhaltungen:
DE - A - 2 525 156
DE - U - 7 632 594
FR - A - 388 958
FR - A - 585 090
FR - A - 887 132
US - A - 3 725 641
US - A - 4 138 606

(73) Patentinhaber: ELPAG AG CHUR, Quaderstrasse 11,
CH-7001 Chur (CH)

(72) Erfinder: Bleckmann, Ingo, Dipl.-Ing. Dr.,
Ignaz-Rieder-Kai 1, A-5020 Salzburg (AT)

(74) Vertreter: Liedl, Gerhard, Steinsdorfstrasse 21 - 22,
D-8000 München 22 (DE)

### Beschreibung

Die Erfindung betrifft eine Kaffeemaschine mit einer Dekorplatte, auf der eine Kaffeekanne abgestellt wird und bei der unterhalb der Dekorplatte ein Rohrheizkörper angeordnet ist.

Aus der DE-U 7 632 594 (Hanssmann) ist ein Eierkocher bekanntgeworden, bei dem an einem Schalenkörper aus rostfreiem, dünnen Stahlblech eine Metallplatte anliegt, welche einen Rohrheizkörper trägt. Dadurch soll eine bessere Wärmeverteilung erreicht werden, da ansonsten bei dünnem Blech von etwa 1 mm bis 1,5 mm sich die vom ring- oder hufeisenförmigen Rohrheizkörper erzeugte Wärme nur sehr zögernd auf die gesamte Bodenfläche des Schalenkörpers verteilen würde.

Aus der US-A 3 725 641 (TILP) ist eine topfförmige Heizeinrichtung zur Erwärmung von Flüssigkeiten bekanntgeworden, bei der ein Rohrheizkörper an einer Schale befestigt ist, die ihrerseits an den Boden des die Flüssigkeit aufnehmenden Gefässes angelötet ist.

Aus der US-A 4 138 606 (Brown) ist ebenfalls eine Kocheinrichtung zur Erhitzung von Flüssigkeiten bekannt, bei der ein Rohrheizkörper auf eine Trägerplatte aufgelötet wird, die ihrerseits an den Boden des topfförmigen Gefässes angelötet wird.

Weiterhin ist es bekannt, bei Warmhalteeinrichtungen die Heizwendeln oder Rohrheizkörper in ein körniges Material einzubetten.

Aus der DE-A 2 525 156 (Albrecht) ist eine Kaffeekanne mit Wärmespeicherboden bekanntgeworden, bei der in einem mehrere Zentimeter dicken Boden aus einem keramischen Material hoher Wärmekapazität ein elektrischer Heizdraht eingelegt ist. Diese Anordnung hat den Nachteil, dass bei Bruch der Kaffeekanne, was relativ häufig vorkommt, auch die relativ teure elektrische Heizeinrichtung unbrauchbar wird. Ausserdem besteht die Gefahr, dass Wasser in das keramische Material eindringt, so dass das Gerät mit entsprechender Gefährdung der Bedienungsperson an Spannung kommt.

Bei Kaffeemaschinen dient die Heizeinrichtung einerseits zur Wassererhitzung in einem Durchflussrohr und andererseits zur Warmhaltung des fertigen Aufgussgetränkes. In einigen Fällen werden auch für beide Zwecke getrennte Heizeinrichtungen verwendet.

Weiterhin ist bei der bekannten Kaffeemaschine die Wärmespeicherung fast ausschliesslich auf das im Rohrheizkörper enthaltene Isoliermaterial beschränkt, so dass auch im Betrieb entsprechende Temperaturschwankungen unvermeidlich sind.

Damit eine gute Wärmeübertragung von der entsprechenden Heizeinrichtung auf das fertiggestellte Aufgussgetränk gewährleistet ist, muss die Heizeinrichtung dem Durchmesser des das Aufgussgetränk aufnehmenden Gefässes, also der Kaffeekanne, angepasst werden. Die Kaffeekannen besitzen schon aus herstellungstechnischen Gründen einen gewölbten, also nach innen gezogenen Boden. Sie stehen dementsprechend auf der Dekorplatte mit einer ringförmigen Auflagefläche auf. Der Durchmesser der Heizeinrichtung muss dementsprechend so gewählt werden, dass die Heizeinrichtung genau unter der ringförmigen Auflagefläche zu liegen kommt. Da nun vom selben oder auch von verschiedenen Herstellern Kaffeekannen mit unterschiedlichem Durchmesser – je nach Höhe der Kanne oder der aufzunehmenden Kaffeemenge – verwendet werden, muss für jede Kaffeemaschinengattung ein anderer, genau angepasster ringförmiger oder hufeisenförmiger Rohrheizkörper verwendet werden. Dadurch wird jedoch die Automatisierung und die Lagerhaltung erschwert mit entsprechender Auswirkung auf die Kosten.

Der Erfindung liegt nun die Aufgabe zugrunde, eine elektrische Heizeinrichtung der in Rede stehenden Art so auszubilden, dass sie für Kaffeemaschinen mit unterschiedlichen Kaffeekannen in ziemlich grosser Variationsbreite Verwendung finden kann.

Die Lösung der Aufgabe ergibt sich aus der Kombination der kennzeichnenden Merkmale des Anspruchs 1. In den abhängigen Ansprüchen sind bevorzugte Ausführungsformen beschrieben.

Wenn der Rohrheizkörper direkt an der Dekorplatte angelötet werden würde, ergäbe sich wegen der relativ schlechten Wärmeleitfähigkeit der Dekorplatte über die Lötstelle ein bevorzugter Wärmeübergang etwa im Bereich des Durchmessers des Rohrheizkörpermantels. Der zwischen der Heizeinrichtung und der Dekorplatte angeordnete Blechring, welcher aus einem Material mit sehr guter Wärmeleitfähigkeit besteht, bewirkt, dass die Wärme auf einen Ringbereich der Dekorplatte übertragen wird, dessen Breite einem Mehrfachen der Breite des Rohrheizkörpers entspricht. Dadurch wird gewährleistet, dass auch Kaffeekannen, die unterschiedliche Durchmesser haben und bei denen dementsprechend die im allgemeinen ringförmigen Anlageflächen unterschiedlich sind, trotzdem so beheizt werden, dass eine hohe Filtrattemperatur, z.B. von 80° C, gewährleistet wird.

Der Blechring bietet den weiteren Vorteil, dass Löt- oder Schweissarbeiten erleichtert werden. Die Dekorplatte wird vom Hersteller der Kaffeemaschine nach praktischen oder ästhetischen Gesichtspunkten ausgewählt. Sie besteht beispielsweise aus Chromnickelstahl. In manchen Fällen ist die Dekorplatte auch gegen Überhitzung, wie sie bei Löt- und Schweissarbeiten auftreten können, sehr empfindlich – sei es, dass sie sich in der Form «verzieht» oder dass Verfärbungen auftreten. Da, wie eingangs erwähnt, jedoch für Kaffeemaschinen unterschiedlicher Hersteller jeweils derselbe Rohrheizkörper verwendet werden soll, kann das Problem auftreten, dass die Materialien der Dekorplatte und des Rohrheizkörpermantels sich schlecht oder nur unter zu hoher Temperaturanwendung miteinander verlöten lassen. Der Blechring kann nun so gewählt werden, dass unabhängig von dem Material des Rohrheizkörpermantels und der Dekorplatte eine entsprechende Verlötung immer möglich ist.

Auf den beiliegenden Zeichnungen ist eine bevorzugte Ausführungsform des Gegenstandes der Erfindung dargestellt. Es zeigen:

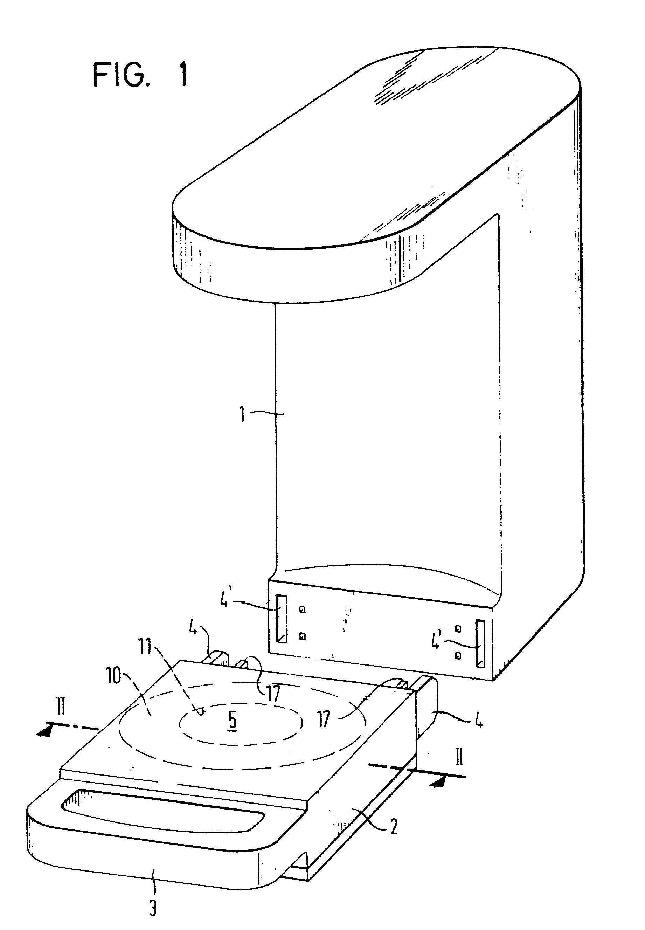

Fig. 1 schaubildlich eine Kaffeemaschine mit abnehmbarer Warmhalteplatte;

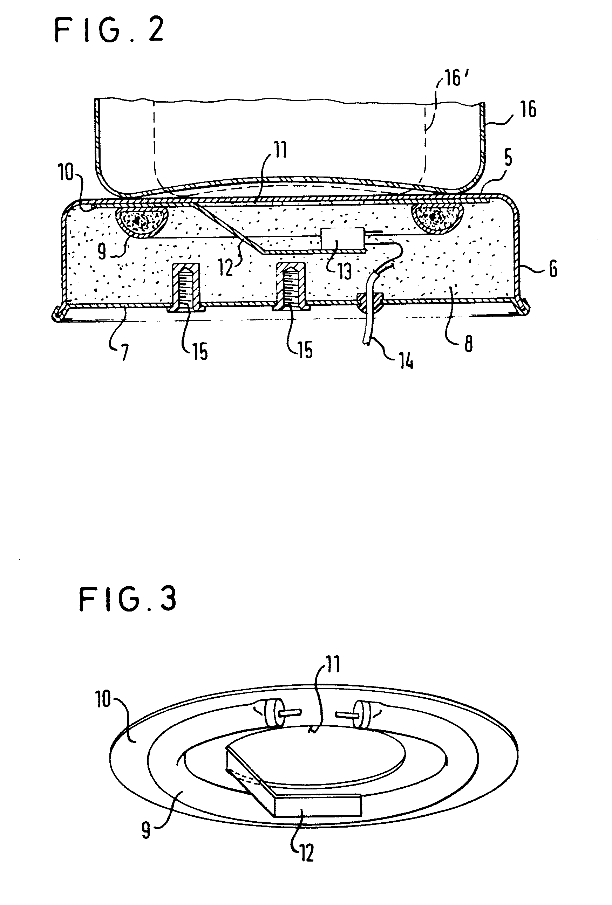

Fig. 2 einen Schnitt längs der Linie II-II in Fig. 1;
Fig. 3 eine Unteransicht der Heizeinrichtung.

Mit einer Kaffeemaschine 1 herkömmlicher Bauart ist eine Abstell- und Warmhalteeinrichtung 2 lösbar verbunden, die mittels des Handgriffes 3 aus der Steckverbindung 4, 4' gezogen werden kann.

Die Abstell- und Warmhalteeinrichtung 2 besitzt eine Abstell- oder Dekorfläche 5, welche von dem Boden einer Schale 6, z.B. aus Edelstahl gebildet wird, die mittels eines Deckels 7, z.B. durch Umbördelung, verschlossen ist. Die Schale 6 ist mit einem körnigen Material 8 gefüllt, welches eine relativ hohe Wärmekapazität hat. Bevorzugt werden Zirkonoxid, Magnesiumoxid oder auch Härtesalze, wie sie zum Härten von Stahl verwendet werden. In Fällen, in denen nicht so hohe Ansprüche an die Wärmekapazität gestellt werden, kann z.B. auch einfacher Sand verwendet werden.

In dem körnigen Material 8 ist ein Rohrheizkörper 9 eingebettet, welcher an einen Blechring 10, der vorzugsweise aus einem gut wärmeleitenden Material, z.B. Aluminium besteht, angelötet ist. Der Blechring 10 seinerseits ist wiederum an die Unterseite der Dekorfläche 5 angelötet. Von dem Blechring 10 steht ein entsprechend ausgestanzter Steg 12 ab, der eine Thermostateinrichtung 13 trägt. Eine elektrische Zuleitung 14 ist einerseits mit der Thermostateinrichtung 13 und den Anschlussenden des Rohrheizkörpers und andererseits mit einer elektrischen Steckverbindung 17 verbunden. Bei Einschieben der Abstell- und Warmhalteeinrichtung 2 in die Steckverbindung 4,4' bzw. 17 wird der Rohrheizkörper 9 an Spannung gelegt, so dass das körnige Material entsprechend aufgeheizt wird,bis die Thermostateinrichtung 13 bei Erreichen der Soll-Temperatur die Stromzufuhr unterbricht.

Auf die Dekorfläche 5 kann nun eine grössere Kaffeekanne 16 oder eine kleinere Kaffeekanne 16' abgestellt werden, die üblicherweise einen gekrümmten Boden besitzen. Da die Wärme von dem Rohrheizkörper 9 auf den Blechring 10 übertragen wird, ergibt sich unabhängig von der Grösse der Kaffeekanne 16, 16' ein entsprechender Wärmeübergang, so dass das Kaffeefiltrat, z.B. auf einer konstanten Temperatur von 80°C gehalten wird.

Da das körnige Material 8 eine relativ hohe Wärmekapazität und eine schlechtere Wärmeleitungfähigkeit als Metall hat, bewirkt es, dass die Wärme von dem Rohrheizkörper 9 überwiegend über den Blechring 10 auf die Dekorplatte 5 abgeleitet wird. Auf der anderen Seite ergibt sich nach einer gewissen Aufheizzeit ein relativ hohes Wärmespeichervermögen, so dass auch nach Abziehen der Warmehalteeinrichtung 2 aus der Kaffeemaschine der Kaffee noch über eine Stunde warmgehalten wird.

Durch die Sacklochschrauben 18 kann das pulverförmige oder körnige Material 8 entsprechend zusammengepresst werden. Die Gewindebohrungen dienen der Befestigung der Heizeinrichtung in der Warmhalteeinrichtung 2 oder gegebenenfalls zum Anschluss weiterer Bauteile.

Anstelle des Blechringes 10 kann auch eine entsprechend geformte Metallplatte, z.B. in Form eines ausgestanzten Vielecks oder Quadrats verwendet werden.

## Patentansprüche

1. Kaffeemaschine mit einer Dekorplatte (5), auf der eine Kaffeekanne (16, 16') abgestellt wird und bei der unterhalb der Dekorplatte (5) ein Rohrheizkörper (9) angeordnet ist, gekennzeichnet durch die Kombination folgender Merkmale:
a) Der Rohrheizkörper (9) ist an einem Blechring (10) befestigt, dessen Breite ein Mehrfaches der Breite des Rohrheizkörpers (9) beträgt.
b) Der Rohrheizkörper (9) mit dem Blechring (10) ist in einem pulverförmigen oder körnigen Material (8) hoher Wärmekapazität eingebettet.
c) Die Dekorplatte (5) und der Blechring (10) mit dem Rohrheizkörper (9) liegen unmittelbar übereinander.
2. Kaffeemaschine nach Anspruch 1, dadurch gekennzeichnet, dass das pulverförmige oder körnige Material (8) Magnesiumoxid, Zirkonoxid oder Härtesalz ist.
3. Kaffeemaschine nach Ansprüchen 1 oder 2, dadurch gekennzeichnet, dass der Rohrheizkörper (9) ein Mantelrohr aus Aluminium besitzt.
4. Kaffeemaschine nach einem der Ansprüche 1 bis 3, dadurch gekennzeichnet, dass der Blechring (10) aus Aluminium besteht.
5. Kaffeemaschine nach einem der Ansprüche 1 bis 4, dadurch gekennzeichnet, dass der Blechring (10) aus einer Scheibe so gestanzt ist, dass ein nach innen abstehender Steg (12) verbleibt, der von der Dekorplatte (5) abgebogen ist und eine Thermostateinrichtung (13) trägt.
6. Kaffeemaschine nach einem der Ansprüche 1 bis 5, dadurch gekennzeichnet, dass das pulverförmige oder körnige Material (8) in einer Schale (6) angeordnet ist, welche in einem Gehäuse untergebracht ist, das über eine Steckverbindung (4, 4') mit der Kaffeemaschine (1) verbunden ist.

## Claims

1. A coffee machine with a facing plate (5) onto which a coffee pot (16, 16') is placed and having a tubular heater (9) disposed below the facing plate (5), characterized by the combination of the following features:
a) The tubular heater (9) is attached to a sheetmaterial ring (10), the width of which is a multiple of the width of the tubular heater (9).
b) The tubular heater (9) together with the sheet-material ring (10) is embedded in a powdery or granular material (8) of high heat capacity.

c) The facing plate (5) and the sheet-material ring (10) together with the tubular heater (9) are disposed one directly above the other.

2. A coffee machine according to claim 1, characterized in that the powdery or granular material (8) is magnesium oxide, zirconium oxide or a carburizing agent.

3. A coffee machine according to claim 1 or 2, characterized in that the tubular heater (9) has a jacket tube of aluminium.

4. A coffee machine according to any one of claims 1 to 3, characterized in that the sheet-material ring (10) consists of aluminium.

5. A coffee machine according to any one of claims 1 to 4, characterized in that the sheet-material ring (10) is punched from a disc in such manner that an inwardly projecting arm (12) remains that is bent away from the facing plate (5) and supports thermostat means (13).

6. A coffee machine according to any one of claims 1 to 5, characterized in that the powdery or granular material (8) is disposed within a shell (6) that is accommodated within a housing connected to the coffee machine (1) through a plug connection (4, 4′).

**Revendications**

1. Cafetière électrique munie d'une plaque décor (5) sur laquelle peut être posée une verseuse (16, 16′) et dans laquelle un élément chauffant tubulaire (9) est disposé sous la plaque décor (5), caractérisée par la combinaison des caractéristiques suivantes:

a) l'élément chauffant tubulaire (9) est fixé sur un anneau de tôle (10) dont la largeur est un multiple de la largeur de l'élément chauffant tubulaire (9),

b) l'élément chauffant tubulaire (9) est noyé avec l'anneau de tôle (10) dans un matériau pulvérulent ou granulaire (8) ayant une capacité calorifique élevée,

c) la plaque décor (5) et l'anneau de tôle (10) avec l'élément chauffant tubulaire (9) sont disposés directement l'un au-dessus de l'autre.

2. Cafetière électrique selon la revendication 1, caractérisée en ce que le matériau pulvérulent ou granulaire (8) est de l'oxyde de magnésium, de l'oxyde de zirconium ou un sel de trempe.

3. Cafetière électrique selon les revendications 1 ou 2, caractérisée en ce que l'élément chauffant tubulaire (9) comporte une enveloppe tubulaire en aluminium.

4. Cafetière électrique selon l'une des revendications 1 à 3, caractérisée en ce que l'anneau de tôle (10) est en aluminium.

5. Cafetière électrique selon l'une des revendications 1 à 4, caractérisée en ce que l'anneau de tôle (10) est découpé dans un disque de telle sorte qu'il subsiste un bandeau (12) saillant vers l'intérieur, qui est coudé à partir de la plaque décor (5) et porte un thermostat (13).

6. Cafetière électrique selon l'une des revendications 1 à 5, caractérisée en ce que le matériau pulvérulent ou granulaire (8) est disposé dans une coupelle (6) logée dans un carter qui est relié à la cafetière électrique (1) par une liaison par enfichage (4, 4′).

# FIG. 1

# FIG. 2

# FIG. 3